# EUROPÄISCHE PATENTSCHRIFT

(11) **EP 3 057 745 B1**
(45) Veröffentlichungstag und Bekanntmachung des Hinweises auf die Patenterteilung: **23.12.2020**
(21) Anmeldenummer: 14812706.1
(22) Anmeldetag: 20.10.2014
(51) Int. Cl.: B26D 7/00, B26D 7/26, B26D 3/08, B26D 7/08, B26D 7/27, B26D 1/00, B62D 1/06

(54) **VERFAHREN, WERKZEUG UND WERKZEUGBAUGRUPPE ZUM EINBRINGEN EINES ELEKTRISCHEN LEITERS IN EINE UMSCHÄUMUNG EINES LENKRADSKELETTS, UND FAHRZEUGLENKRAD**
METHOD, TOOL, AND TOOL ASSEMBLY FOR INTRODUCING AN ELECTRICAL CONDUCTOR INTO A FOAM CLADDING OF A STEERING WHEEL FRAME, AND VEHICLE STEERING WHEEL
PROCÉDÉ, OUTIL ET ENSEMBLE D'OUTILS PERMETTANT L'INTRODUCTION D'UN CONDUCTEUR ÉLECTRIQUE DANS UNE FORMATION ENVELOPPANTE EN MOUSSE D'UN SQUELETTE DE VOLANT, ET VOLANT DE VÉHICULE

(30) Priorität: 18.10.2013 DE 102013017319
(43) Veröffentlichungstag der Anmeldung: 24.08.2016
(73) Patentinhaber: ZF Automotive Safety Germany GmbH, 63743 Aschaffenburg (DE)
(72) Erfinder: LAMMERS, Alexander, 64367 Mühltal (Traisa) (DE)
(74) Vertreter: ZF Patentabteilung - DIPS
(86) Internationale Anmeldenummer: PCT/DE2014/000526
(87) Internationale Veröffentlichungsnummer: WO 2015/055172

(56) Entgegenhaltungen:
- DE-A1- 10 111 448
- DE-C- 845 163
- DE-C1- 19 910 132
- DE-C1- 19 910 132
- US-A1- 2013 056 455

## Beschreibung

Die Erfindung betrifft ein Verfahren, ein Werkzeug sowie eine Baugruppe zum Einbringen eines elektrischen Leiters, insbesondere eines Heizdrahtes, in eine Umschäumung eines Lenkradskeletts. Die Erfindung betrifft des Weiteren ein Fahrzeuglenkrad nach dem Oberbegriff von Anspruch 12.

Aus Komfortgründen weisen Fahrzeuglenkräder häufig eine Lenkradheizung auf. Beispielsweise zeigt die DE 199 10 132 C1 ein solches Fahrzeuglenkrad. Die Lenkradheizung kann auch durch mehrere, in der Umschäumung des Lenkradskeletts des Fahrzeuglenkrades angeordnete elektrische Heizdrähte gebildet ist. Um eine gute und effiziente Heizleistung zu erzielen, müssen die Heizdrähte in einer möglichst geringen Tiefe in der Umschäumung des Lenkradskeletts angeordnet sein. Andererseits müssen die Heizdrähte zuverlässig in der Umschäumung gehalten sein, um ein Verrutschen der Drähte zu verhindern. Um eine gleichmäßige Erwärmung des Fahrzeuglenkrades zu gewährleisten, ist es zudem erforderlich, dass die Heizdrähte in einer gleichbleibenden Tiefe in der Umschäumung des Lenkradskeletts angeordnet sind. Mit den bisher gekannten Verfahren ist die gleichmäßige Einbringung des elektrischen Leiters in die Umschäumung sehr zeit- und arbeitsintensiv.

In der US 2013/0056455 A1 ist ein gattungsgemäßes Fahrzeuglenkrad offenbart, bei dem gemäß einer speziellen Ausführungsform mit einem Cutter-Messer ein Schnitt in die das Lenkradskelett umgebende Polyurethanschicht eingebracht ist, wobei sich der Schnitt spiralförmig am Außenumfang des Lenkrads erstreckt. Ein Heizdraht für eine Lenkradheizung wird dann anschließend in diesen Schnitt eingepresst und fixiert.

Ferner können elektrische Leiter, also zum Beispiel Drähte, auch als Teil von Sensoreinrichtungen in das Lenkrad integriert sein.

Aufgabe der Erfindung ist es, ein Verfahren zum Einbringen eines elektrischen Leiters, insbesondere eines Heizdrahtes, in eine Umschäumung eines Lenkradskeletts bereitzustellen, das eine schnelle und gleichmäßige Verlegung des elektrischen Leiters ermöglicht. Aufgabe der Erfindung ist es des Weiteren, ein Werkzeug sowie eine Werkzeugbaugruppe bereitzustellen, um einen elektrischen Leiter gleichmäßig und schnell in einer Umschäumung eines Lenkradskeletts verlegen zu können. Ferner ist es Aufgabe der Erfindung, ein Lenkrad mit einem solchen elektrischen Leiter bereitzustellen.

Zur Lösung der Aufgabe ist ein Verfahren zum Einbringen eines elektrischen Leiters, insbesondere eines Heizdrahtes, in eine Umschäumung eines Lenkradskeletts vorgesehen, das die folgenden Schritte aufweist:
- Einbringen eines Schnittes in die Umschäumung mittels eines Schneidwerkzeugs, und
- gleichzeitiges Einbringen des Leiters in den erzeugten Schnitt.

Bei den bisher bekannten Verfahren wird der elektrische Leiter auf die Umschäumung aufgeklebt.

Erfindungsgemäß wird der elektrische Leiter gleichzeitig mit dem Einbringen des Schnitts in diesen Schnitt eingebracht, sodass kein zusätzlicher Arbeitsschritt erforderlich ist, um beispielsweise die Schnittränder zum Einlegen des Leiters wieder auseinanderzubiegen. Das Einbringen des Schnittes sowie des Leiters erfolgt also in einem gemeinsamen Arbeitsschritt, wodurch ein wesentlich schnelleres und effizienteres Einlegen des Leiters möglich ist. Der elektrische Leiter, der ein Draht, ein Band oder ein Bündel mehrerer Litzen sein kann, wird in den gerade erzeugten Schnitt eingelegt, während das Werkzeug zum Erzeugen des Schnittes noch weiter verfährt und den Schnitt verlängert. Der Leiter folgt also dem Schneidwerkzeug unmittelbar nach und hat nur einen Abstand von wenigen Millimetern zur Schneidkante. Somit eilt das Schneidwerkzeug dem eingelegten Abschnitt des Leiters einige wenige Millimeter voraus, wobei aber der Schneidvorgang und der Einbringvorgang gleichzeitig stattfinden, lediglich räumlich minimal voneinander versetzt.

Das Schneiden erfolgt vorzugsweise ohne Materialabtrag, das heißt, es wird lediglich ein singulärer Schnitt in der Umschäumung erzeugt, keine Nut ausgeschnitten.

Vorzugsweise erfolgt das Einbringen des Leiters bevor sich die beim Einbringen des Schnittes auseinandergedrückten Schnittränder des Schnittes wieder aneinander anlegen. Die Schnittränder werden beim Einbringen des Schnittes durch das Schneidwerkzeug elastisch auseinandergedrückt und kehren nach dem Weiterführen oder dem Entfernen des Schneidwerkzeugs elastisch in ihre Ausgangsposition zurück, in der die Schnittränder aneinander anliegen. Der elektrische Leiter wird eingelegt, bevor die auseinandergedrückten Schnittränder wieder aneinander anliegen, sodass ein erneutes Auseinanderbiegen der Schnittränder nicht erforderlich ist. Nachdem die Schnittränder wieder aneinander anliegen, schützen diese den Leiter vor äußeren Beanspruchungen und einem Herausfallen aus dem Schnitt.

Aufgrund der elastischen Eigenschaften der Umschäumung schließt sich also der Schnitt nach dem Einlegen des Leiters vorzugsweise selbst, sodass der Leiter sicher gehalten und geschützt ist. Zusätzlich ist es möglich, dass der Schnitt nach dem Einlegen des Leiters aktiv verschlossen und/oder abgedeckt wird. Dies kann durch stoffschlüssiges Verbinden, beispielsweise Verkleben der Schnittränder miteinander erfolgen.

Gemäß einer bevorzugten Ausführungsform hat der Leiter/ Draht hat einen dünnen thermoplastischen Kleberüberzug. Dieser kann mittels Bestromung / Erwärmung aktiviert werden, was den Draht zusätzlich fixiert. Durch die Erwärmung des Klebers kann die Schnittkante wieder verschlossen werden.

Der Leiter kann nach dem Einlegen auch auf andere Weise stoffschlüssig mit der Umschäumung verbunden werden, beispielsweise durch ein Smartbond-Verfahren.

Gemäß einer weiteren bevorzugten Ausführungsform ist vorgesehen, daß der Leiter durch ein kurzzeitiges Erhitzen und anschließendes Abkühlen in der Umschäumung fixiert wird. Bei diesem Verfahren erfolgtdas Erhitzen vorzugsweise auf eine Temperatur im Bereich der Schmelztemperatur der Umschäumung, bevorzugt auf eine Temperatur > 130°C.

Es ist hierbei bevorzugt, dass der Leiter mit ca. 10 - 50V, 5 bis 60 Sekunden , insbesondere 10 - 30 Sekunden lang bestromt wird.

So kann ein erfindungsgemäßen Fahrzeuglenkrad geschaffen werden mit einem Lenkradskelett, einem Lenkradkranz, der mit einer Umschäumung umschäumt ist, und einem elektrischen Leiter, wobei in der Umschäumung ein Schnitt eingebracht ist, in dem der elektrische Leiter liegt und wobei der elektrische Leiter in der Umschäumung, insbesondere durch Einschmelzen, fixiert ist.

Es ist aber auch möglich, dass die Umschäumung nach dem Einlegen des Leiters mit einer weiteren Umschäumung oder einer Ummantelung abgedeckt wird. Die Ummantelung kann beispielsweise eine Grifffläche für das Fahrzeuglenkrad, beispielsweise aus Stoff, Leder oder Kunstleder sein. Da der Leiter aber sicher im Schnitt in der Umschäumung gelagert ist, ist unabhängig von einer weiteren Umschäumung oder Ummantelung eine zuverlässige Lagerung und Fixierung des Leiters in der Umschäumung sichergestellt.

Der Leiter kann entsprechend den jeweils gewünschten Heizeigenschaften in der Umschäumung verlegt werden. Vorzugsweise verläuft der zumindest eine Schnitt im Wesentlichen in Draufsicht gesehen in Umfangsrichtung um die Lenkradnabe längs des Lenkradkranzes. Dies erleichtert das Einschneiden der Umschäumung mit einem Werkzeug oder einem Industrieroboter, da dieser lediglich längs des Lenkradkranzes bewegt werden muss, nicht aber im Radialschnitt gesehen um den Lenkradkranz herum.

Um eine gleichmäßige und ausreichende Heizleistung des elektrischen Leiters sowie einen sicheren Halt des Leiters im Schnitt zu gewährleisten, hat der Schnitt eine Tiefe von mindestens 0,1 mm, vorzugsweise von mindestens 0,5 mm, insbesondere von mindestens 1 mm und/ oder vorzugsweise eine Tiefe von höchstens 9 mm, vorzugsweise von höchstens 5 mm, weiter vorzugsweise von höchstens 3 mm, insbesondere von höchstens 2 mm.

Gemäß einer weiteren Ausführungsform wird vorgeschlagen, dass die Schnitttiefe das 0,8 bis 10,5-fache, insbesondere das 1,0-fache bis 1,5-fache des Drahtdurchmessers beträgt.

Um eine möglichst gleichmäßige Erwärmung des Fahrzeuglenkrads zu erzielen, sind vorzugsweise am gesamten Umfang des Lenkradkranzes elektrische Leiter oder Leiterabschnitte vorgesehen. Dazu können mehrere kurze elektrische Leiter in die Umschäumung eingebracht werden. Es ist aber auch möglich, dass ein längerer elektrischer Leiter in das Lenkradskelett eingebracht wird, der mehrfach um den Lenkradkranz geführt ist. Vorzugsweise werden zwei längere elektrische Leiter in den Lenkradkranz eingebracht, wobei einer (im Wesentlichen) auf der vorderen (einem Fahrer zugewandten) Seite und ein zweiter (im Wesentlichen) auf der hinteren (dem Armaturenbrett zugewandten, vom Fahrer weggewandten) Seite angeordnet sind. In diesen Ausführungsformen ist der Schnitt vorzugsweise längs des Lenkradkranzes in mehreren Umläufen um die Lenkradnabe geführt, sodass ein im Wesentlichen spiralförmiger Schnitt erzeugt wird und der Leiter in mehreren Wicklungen verläuft und/oder bei überkreuzenden Schnitten die Schnitttiefen im Kreuzungspunkt unterschiedlich sind.

Der Schnitt und das Einbringen des Leiters erfolgen vorzugsweise mittels eines Werkzeugs, das auf einem wenigstens 3-achsigen, frei programmierbaren Industrieroboter montiert ist, der das Werkzeug bedient. Mit einem solchen frei programmierbaren Industrieroboter ist eine freie Wahl der Schnittführung möglich. Aufgrund der großen Genauigkeit solcher Industrieroboter ist zudem eine zuverlässige und gleichmäßige Schnittführung gewährleistet.

Um auch komplexere Schnittführungen zu ermöglichen, kann zusätzlich oder optional auch das Lenkradskelett auf einem zweiten wenigstens 3-achsigen, frei programmierbaren Industrieroboter gehalten sein, der das Lenkradskelett relativ zum Werkzeug bewegt.

Zur Lösung der Aufgabe ist des Weiteren ein Werkzeug zum Einbringen eines elektrischen Leiters, insbesondere eines Heizdrahtes, in eine Umschäumung eines Lenkradskeletts vorgesehen, insbesondere zum Durchführen eines erfindungsgemäßen Verfahrens, wobei das Werkzeug ein Schneidwerkzeug mit einer Schneideinrichtung, die eine in eine Schnittrichtung weisende Schneidkante aufweist, sowie ein Einführwerkzeug für den Leiter hat, wobei das Schneidwerkzeug und das Einführwerkzeug miteinander gekoppelt sind und sich das Einführwerkzeug entgegen der Schnittrichtung vorzugsweise unmittelbar an die Schneideinrichtung anschließt.

Das Einführwerkzeug ist so in Schnittrichtung knapp hinter der Schneideinrichtung bzw. dem Schneidwerkzeug angeordnet, dass der elektrische Leiter gleichzeitig oder unmittelbar nach dem Einbringen des Schnittes in die Umschäumung in den Schnitt eingelegt werden kann, insbesondere bevor sich die Schnittränder des Schnittes, die durch die Schneideinrichtung beim Einbringen des Schnittes auseinandergedrückt werden, wieder aneinander anlegen.

Erfindungsgemäß ist (somit) ein gleichzeitiges Einbringen des elektrischen Leiters in einem Arbeitsschritt möglich.

Um den elektrischen Leiter beim Einlegen zu schützen, kann das Einführwerkzeug einen Ausgang aufweisen, der in Form eines Trompetenmundes ausgebildet ist.

Um die Schnittränder offen zu halten, das heißt voneinander entfernt zu halten, kann zwischen dem Schneidwerkzeug und dem elektrischen Leiter auch noch ein Zwischenteil verwendet werden, welches den gerade erzeugten Schnitt offen hält, bis beim Weiterfahren dann der entsprechende Abschnitt des elektrischen Leiters die gerade erzeugte Schnittstelle erreicht.

Die Breite des Einführwerkzeugs senkrecht zur Schnittrichtung ist vorzugsweise kleiner als die Breite der Schneideinrichtung, so dass der Schnitt durch das Einführwerkzeug nicht zusätzlich auseinandergedrückt wird. Der Widerstand des Werkzeugs beim Führen im Schnitt ist dadurch sehr gering, da das Einführwerkzeug nicht an den Schnittflächen anliegt. Bei einer anderen Ausführungsform entspricht die Breite des Einführwerkzeugs der Breite der Schneideinrichtung.

Das Einführwerkzeug kann beispielsweise einen Einführkanal aufweisen, durch den der Leiter geführt werden kann, wobei der Einführkanal in Schnittrichtung hinter der Schneideinrichtung des Schneidwerkzeugs endet. Mit einem solchen Einführkanal kann der Leiter widerstandsarm in den Schnitt eingebracht werden. Da der Leiter nicht mit den Schnitträndern in Anlage kommen kann, ist zudem eine Beschädigung der Schnittränder durch den Leiter zuverlässig ausgeschlossen.

Das Schneidwerkzeug steht beispielsweise senkrecht zur Schnittrichtung mit einer Vorschneidetiefe über das Einführwerkzeug vor, sodass hinter dem Schnitt ein größerer Freiraum vorhanden ist, in den der elektrische Leiter eingelegt werden kann. Diese Vorschneidetiefe liegt vorzugsweise zwischen 0,1mm und 2mm.

Das Schneidwerkzeug und das Einführwerkzeug können einstückig miteinander verbunden sein, beispielsweise verschweißt, verklebt oder miteinander verlötet sein. Es ist aber denkbar, dass diese form- und/oder kraftschlüssig miteinander verbunden sind, beispielsweise auch über einen Adapter. Ein solcher Adapter ermöglicht auch eine variable Einstellung der Vorschneidetiefe.

Um das Einfädeln des elektrischen Leiters zu vereinfachen, kann das Einführwerkzeug eine sich insbesondere konusförmig verjüngende Führung in einer Einführhilfe des elektrischen Leiters aufweisen.

Das offene Ende des Einführkanals ist beispielsweise so angeordnet und ausgerichtet, dass der elektrische Leiter in der gewünschten Position und Orientierung sowie der gewünschten Tiefe aus dem Einführkanal in den Schnitt austritt. Der Kanal kann beispielsweise abschnittsweise unmittelbar an der Rückseite der Schneideinrichtung anliegen, sodass dieser widerstandsarm im Schnitt hinter der Schneideinrichtung her geführt werden kann.

Um ein besseres Einlegen des elektrischen Leiters in den Schnitt zu gewährleisten, ist der Einführkanal beispielsweise von der Rückseite der Schneideinrichtung weg gebogen, insbesondere in einem Winkel von 15° bis 45° bezogen auf die Rückseite der Schneideinrichtung. Vorzugsweise ist der Einführkanal so gebogen, dass das offene, im Schnitt angeordnete Ende nach hinten von der Schneideinrichtung weg gebogen ist, sodass der elektrische Leiter entgegen der Schnittrichtung aus dem Einführkanal austreten kann und bei einem Austritt aus dem Einführkanal bereits die gewünschte Orientierung im Schnitt aufweist. So ist es bevorzugt, dass der Draht unter einem Injektionswinkel von 45° bis 90°, insbesondere von 75°gegenüber der Schneidrichtung eingelegt wird.

Das Werkzeug kann zusätzlich eine Zuführung für den Leiter aufweisen, mit der der elektrische Leiter, vorzugsweise in der Geschwindigkeit der Schnittführung, nachgeführt wird, sodass dieser spannungsfrei in den Schnitt eingelegt werden kann.

Die Zuführung kann beispielsweise eine rohr- oder schlauchförmige Zuleitung für den elektrischen Leiter aufweisen, beispielsweise einen Teflonschlauch, der eine geringe Reibung aufweist.

Das Schneidwerkzeug kann eine beliebige Ausrichtung der Schneideinrichtung und der Schneidkante haben, die geeignet ist, um einen Schnitt in die Umschäumung einzubringen. Eine besonders gute Schnittführung ist möglich, wenn die Schneidkante einen Winkel (Schnittwinkel) von 30° bis 90°, insbesondere von 45° bis 75° zur Schnittrichtung aufweist.

Die Schneideinrichtung ist beispielsweise eine Klinge mit einer in Schnittrichtung weisenden Schneidkante.

Eine besonders gute Schnittführung ist möglich, indem das Schneidwerkzeug ein Ultraschallschneidwerkzeug ist, das heißt zusätzlich zur Vorschubbewegung noch in kleinen Amplituden schnell ausgelenkt wird.

Vorzugsweise wird das Werkzeug mit einem gleichbleibenden Anpressdruck gegen das Werkstück, also das Lenkradskelett gedrückt, um eine gleichmäßige Schnittführung, insbesondere Schnitttiefe, sicherzustellen. Am Werkzeug ist dazu beispielsweise eine Anpressvorrichtung vorgesehen, die das Werkzeug mit einer definierten Kraft, zum Beispiel einer definierten Federkraft, gegen ein Werkstück, üblicherweise ein Lenkradskelett, beaufschlagen und Toleranzen im Werkstück ausgleichen kann.

Die Anpressvorrichtung ist beispielsweise so ausgebildet, dass der Anpressdruck einstellbar ist oder die Anpressvorrichtung arretiert werden kann.

Um die gewünschte Schnitttiefe sicherzustellen, kann die Schneideinrichtung eine separate Führungseinrichtung zur Einstellung der Schnitttiefe aufweisen. Die Führungseinrichtung ist beispielsweise so ausgebildet, dass nur die für die Schnitttiefe der Schneideinrichtung benötigte Länge der Schneideinrichtung freigegeben wird. Die freigegebene Länge der Schneideinrichtung kann beispielsweise auch während der Schnittführung veränderbar sein.

Die Führungseinrichtung wird vorzugsweise durch die Anpressvorrichtung gegen das Werkstück gedrückt und liegt an dessen Oberfläche auf. Dazu weist die Führungseinrichtung einen Führungsschuh auf, der am Werkstück (zum Beispiel Lenkradskelett) anliegen kann, wobei die Schneideinrichtung über diesen Führungsschuh hinaus in das Werkstück ragt.

Die Führungseinrichtung weist beispielsweise einen Stellmechanismus auf, der den Führungsschuh relativ zur Schneideinrichtung bewegen kann, um die Schnitttiefe einzustellen, was manuell, aber auch elektrisch erfolgen kann.

Erfindungsgemäß ist des Weiteren eine Werkzeugbaugruppe zum Einbringen eines elektrischen Leiters, insbesondere eines Heizdrahtes, in eine Umschäumung eines Lenkradskelettes vorgesehen, mit einem erfindungsgemäßen Werkzeug und einem Industrieroboter, an dem das Werkzeug montiert ist und dreidimensional im Raum bewegt werden kann. Vorzugsweise ist eine Steuerung für den Industrieroboter vorgesehen, um das Werkzeug mit der gewünschten Schnittführung am Lenkradskelett entlang führen zu können. Zusätzlich kann eine Führungsbaugruppe vorgesehen sein, die am Lenkradskelett anliegt und sicherstellt, dass die gewünschte Schnitttiefe gewährleistet ist. Denkbar ist in einer anderen Ausführungsform auch eine taktile oder mittels Sensor gesteuerte Abstandshaltung zur Schaumoberfläche.

Vorzugsweise ist ein zweiter frei programmierbarer Industrieroboter vorgesehen, auf dem das Lenkradskelett montiert und dreidimensional im Raum bewegt werden kann.

Des Weiteren kann eine Positionierungseinrichtung für den elektrischen Leiter vorgesehen sein, die am Lenkradskelett positioniert werden kann und eine Aufnahme für einen am Lenkradskelett angeordneten elektrischen Anschluss für die elektrischen Leiter sowie Halteelemente für den Anfang und das Ende des elektrischen Leiters aufweist.

Die Positionierungseinrichtungen weist beispielsweise Führungselemente für den elektrischen Leiter auf. Die Führungselemente können Umlenkelemente sein, um die der elektrischen Leiter herum gelegt werden kann, oder Niederhalter, die ein Herausziehen des elektrischen Leiters beim Kontaktieren mit einem elektrischen Anschluss oder beim Abschneiden des elektrischen Leiters verhindern.

Die Positionierungseinrichtung kann des Weiteren eine Befestigungsvorrichtung und Positionierhilfen aufweisen, um die Positionierungseinrichtung am Lenkradskelett zu fixieren.

Darüber hinaus kann ein dem Halteelement für das Ende des elektrischen Leiters zugeordnetes Schneidwerkzeug für den elektrischen Leiter vorgesehen sein, um den elektrischen Leiter nach dem Verlegen abzuschneiden.

Zur Lösung der Aufgabe ist des Weiteren ein Fahrzeuglenkrad mit einem Lenkradskelett, einem Lenkradkranz, der umschäumt ist, und einem elektrischen Leiter vorgesehen, wobei in der Umschäumung ein Schnitt eingebracht ist, in dem der elektrische Leiter liegt. Der elektrische Leiter ist insbesondere mit einem erfindungsgemäßen Verfahren in die Umschäumung eingebracht.

Eine erste Lage von Wicklungen ist beispielsweise in einer ersten Tiefe verlegt und eine zweite Lage von Wicklungen in einer anderen, zweiten Tiefe, wobei insbesondere die Wicklungen der ersten Lage versetzt zu den Wicklungen der zweiten Lage sind.

Erfindungsgemäß weist der Schnitt Kreuzungspunkte von Abschnitten des Schnitts auf, wobei im Bereich der Kreuzungspunkte einer der sich kreuzenden Abschnitte des Schnittes eine größere Tiefe aufweist und der elektrische Leiter in diesem Abschnitt des Schnittes tiefer eingelegt ist als im darüberliegenden Abschnitt.

Das erfindungsgemäße Fahrzeuglenkrad kann im Bereich des Schnittes oder insgesamt nach außen abgedeckt sein, beispielsweise mittels einer weiteren Umschäumung oder einer Ummantelung, zum Beispiel aus Stoff, Naturleder, Kunstleder oder Holz.

Darüber hinaus verläuft bei einem erfindungsgemäßen Fahrzeuglenkrad der Schnitt im Wesentlichen in Umfangsrichtung um die Lenkradnabe (in Draufsicht gesehen) längs des Lenkradkranzes.

Der Schnitt kann in mehreren Umläufen um die Lenkradnabe verlaufen, sodass er eine Spiralform besitzt. Der oder die Leiter verlaufen in mehreren Wicklungen in der Umschäumung.

Zu betonen ist, dass mit dem Begriff "Umschäumung" nicht notwendigerweise das Lenkradskelett in ein Schäumwerkzeug eingelegt und in Schaum eingebettet werden muss. Es wäre auch möglich, die Umschäumung separat herzustellen und beispielsweise auf das Lenkradskelett aufzukleben.

Das erfindungsgemäße Fahrzeuglenkrad kann dieselben Merkmale aufweisen, die zuvor im Zusammenhang mit dem Verfahren zu seiner Herstellung erläutert wurden.

Weitere Vorteile und Merkmale finden sich in der nachfolgenden Beschreibung in Verbindung mit den beigefügten Zeichnungen. In diesen zeigen:
- Figur 1 eine perspektivische Ansicht eines erfindungsgemäßen Fahrzeuglenkrads hergestellt nach dem erfindungsgemäßen Verfahren mit in die Umschäumung eingebrachtem elektrischen Leiter,
- Figuren 2a und 2b Detailansichten des Fahrzeuglenkrads aus Figur 1 im Bereich einer Lenkradspeiche,
- Figur 3a und b weitere Detailansichten des Fahrzeuglenkrads aus Figur 1 im Bereich einer Ausnehmung zur Aufnahme einer Lenkradummantelung,
- Figur 4 einen Radialschnitt durch den Lenkradkranz des Fahrzeuglenkrads aus Figur 1,
- Figur 5 einen Radialschnitt durch eine zweite Ausführungsform eines Lenkradkranzes eines Fahrzeuglenkrads,
- Figur 6 eine Detailansicht des Fahrzeuglenkrades aus Figur 5 im Schnitt,
- Figuren 7a und 7b eine Seitenansicht sowie eine Schnittansicht durch ein erfindungsgemäßes Werkzeug zum Einbringen eines elektrischen Leiters in das Fahrzeuglenkrad aus Figur 1,
- Figuren 8a bis 8c verschiedene Ansichten und Ausrichtungen einer zweiten Ausführungsform eines erfindungsgemäßen Werkzeugs zum Einbringen eines elektrischen Leiters,
- Figuren 9a bis 9c verschiedene Ansichten und Ausrichtungen einer dritten Ausführungsform eines erfindungsgemäßen Werkzeugs zum Einbringen eines elektrischen Leiters,
- Figuren 10a bis 10c verschiedene Ansichten und Ausrichtungen einer vierten Ausführungsform eines erfindungsgemäßen Werkzeugs zum Einbringen eines elektrischen Leiters,
- Figuren 11a bis 11c verschiedene Ansichten und Ausrichtungen einer fünften Ausführungsform eines erfindungsgemäßen Werkzeugs zum Einbringen eines elektrischen Leiters,
- Figuren 12a bis 12c verschiedene Ansichten und Ausrichtungen einer sechsten Ausführungsform eines erfindungsgemäßen Werkzeugs zum Einbringen eines elektrischen Leiters,
- Figuren 13a bis 13c verschiedene Ansichten und Ausrichtungen einer siebten Ausführungsform eines erfindungsgemäßen Werkzeugs zum Einbringen eines elektrischen Leiters,
- Figuren 14a bis 14c verschiedene Ansichten und Ausrichtungen einer achten Ausführungsform eines erfindungsgemäßen Werkzeugs zum Einbringen eines elektrischen Leiters,
- Figur 15 eine Detailansicht einer Einführhilfe für ein erfindungsgemäßes Werkzeug,
- Figuren 16a und 16b verschiedene Ansichten einer Positionierungsbaugruppe für eine erfindungsgemäße Werkzeugbaugruppe zum Einbringen eines elektrischen Leiters in das Fahrzeuglenkrad aus Figur 1 nach dem erfindungsgemäßen Verfahren,
- Figur 17 eine Ansicht einer erfindungsgemäßen Werkzeugbaugruppe, und
- Figur 18 eine Ansicht einer Positionierungseinrichtung einer erfindungsgemäßen Werkzeugbaugruppe.

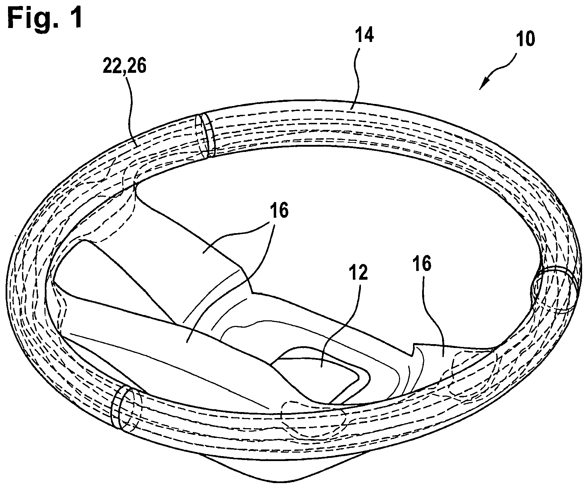

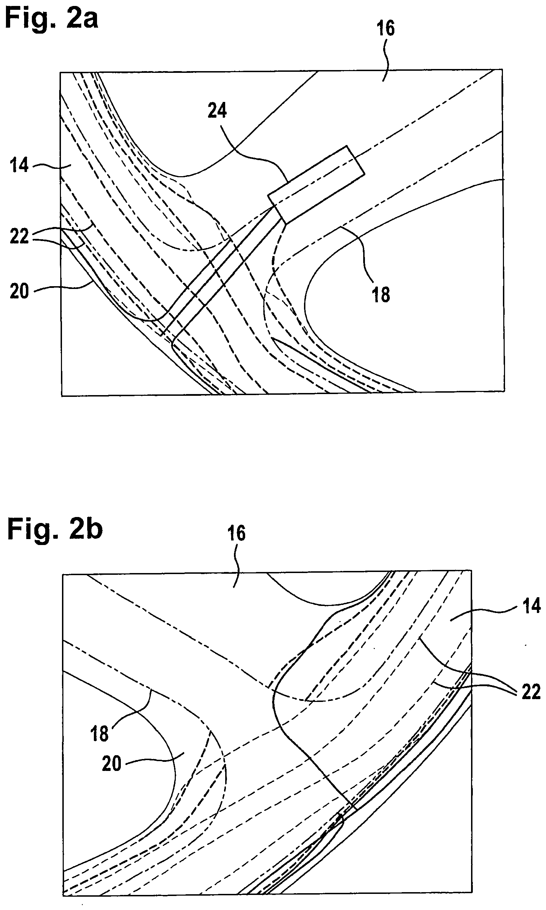

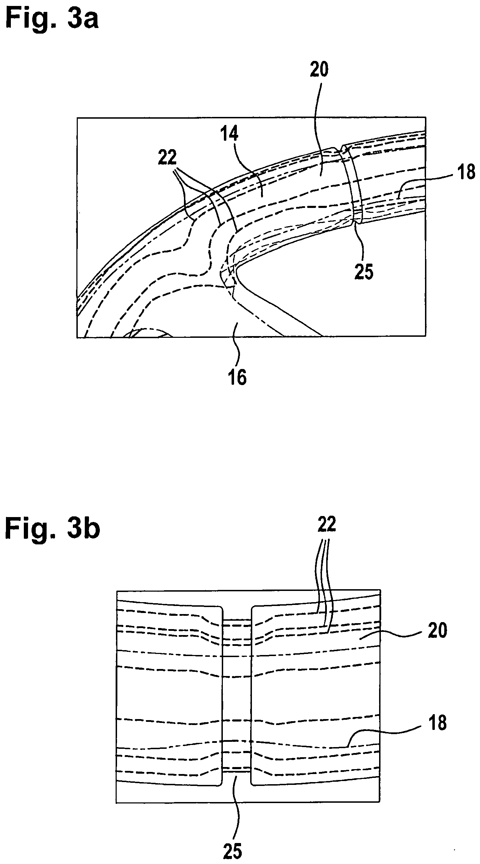

In Figur 1 ist ein Fahrzeuglenkrad 10 mit einer Lenkradnabe 12, einem Lenkradkranz 14 sowie mehreren Speichen 16, die die Lenkradnabe 12 und den Lenkradkranz 14 miteinander verbinden, gezeigt. Wie in den Figuren 2a und 2b sowie 3a und 3b zu sehen ist, hat das Fahrzeuglenkrad 10 ein Lenkradskelett 18 aus einem harten Material (vorzugsweise einer Leichtmetalllegierung) sowie eine Umschäumung 20, die aus einem weichen, elastischen Material besteht und das Lenkradskelett 18 zumindest im Bereich des Lenkradkranzes 14 außenseitig vollständig umschließt.

In der Umschäumung 20 sind ein oder mehrere elektrische Leiter 22 vorgesehen, die mit einem an einer Speiche angeordneten Anschluss 24 mit dem Stromnetz des Fahrzeugs verbunden sind. Die elektrischen Leiter 22 bilden Heizdrähte, die sich durch Bestromung aufheizen und das Fahrzeuglenkrad 10, insbesondere den Lenkradkranz 14, erwärmen.

Wie in Figur 1 zu sehen ist, sind die Schnitte 26 längs des Lenkradkranzes 14 kreisförmig um die Lenkradnabe 12 herum geführt. Es können mehrere kreisförmige Schnitte 26 vorhanden sein, die im Wesentlichen parallel zueinander verlaufen, oder einer oder mehrere dieser Schnitte können auch in mehreren Umläufen um die Lenkradnabe 12 längs des Lenkradkranzes mit geringfügigem Abstand voneinander geführt werden, sodass ein im Wesentlichen spiralförmiger Schnitt 26 erzeugt wird. Wenn der Leiter 22 in diesen spiralförmigen Schnitt 26 eingelegt wird, verläuft er in mehreren Wicklungen. Natürlich ist es von Vorteil, wenn an den Stellen, an denen eine höhere Heizleistung erforderlich ist, Schnitte näher aneinander liegen.

Durch das im Folgenden noch näher beschriebene Verfahren ist es möglich, sehr flexibel die Heizleistung an die Gegebenheiten anzupassen, indem ganz einfach engere und mehr Schnitte oder engere Umläufe eines spiralförmigen Schnittes erzeugt werden. Das entsprechende Werkzeug selbst muss nur umprogrammiert werden, um einen anderen Schnittverlauf durchzuführen.

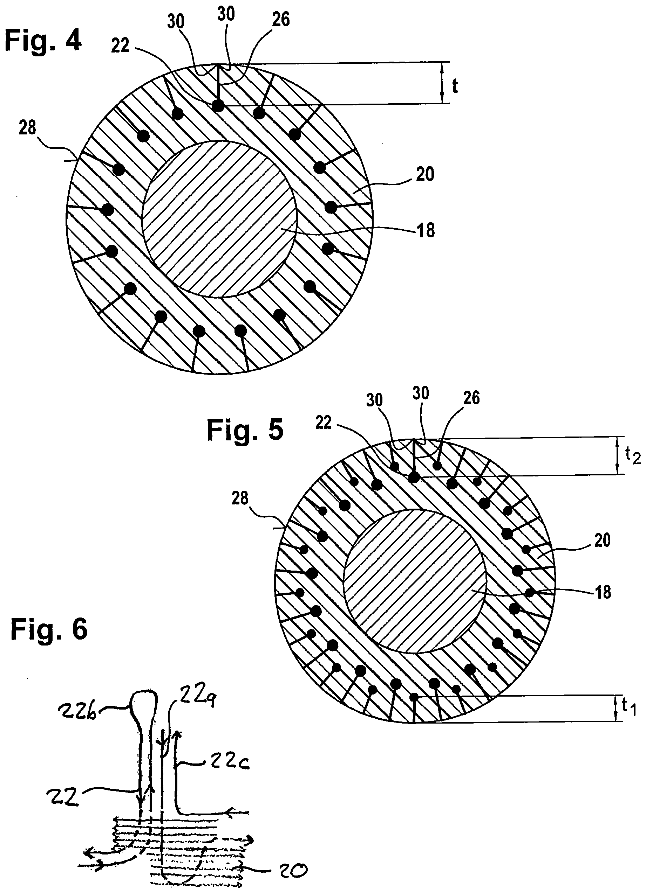

Die Leiter 22 sind im Wesentlichen in einer gleichbleibenden Tiefe t von ca. 0,1 mm bis 3 mm in der Umschäumung 20 verlegt (siehe auch Figur 4).

Wie in den Figuren 3a und 3b zu sehen ist, sind die Leiter 22 lediglich im Bereich von Ausnehmungen 25 für eine Ummantelung (zum Beispiel ein Dekorteil) des Fahrzeuglenkrades 10 geringfügig tiefer eingelegt.

Wie in Figur 4 zu sehen ist, sind in die Umschäumung 20 ein oder mehrere Schnitte 26 eingebracht, die von der Oberfläche 28 der Umschäumung 20 im Wesentlichen radial nach innen geführt sind. Die Leiter 22 sind in diese Schnitte 26 eingelegt.

Das Material der Umschäumung 20 ist elastisch, sodass die Schnittränder 30 des Schnittes 26 nach dem Einlegen der Leiter 22 bzw. dem Einbringen des Schnittes 26 in eine Ausgangsposition zurückfedern, in der die Schnittränder 30 aneinander anliegen. Die Leiter 22 sind so zuverlässig in der Position in der Umschäumung 20 gehalten und vor einem Herausfallen geschützt.

In Figur 5 ist ein Radialschnitt einer zweiten Ausführung eines Fahrzeuglenkrades 10 gezeigt. In dieser Ausführungsform sind Schnitte 26 mit zwei unterschiedlichen Tiefen t₁ und t₂ vorgesehen. Der elektrische Leiter 22 ist also in zwei verschiedenen Tiefen in der Umschäumung im Lenkradskelett 18 verlegt. In dieser Ausführungsform können zuerst alle Wicklungen einer ersten Lage mit der Tiefe t1 verlegt werden und anschließend die Wicklungen einer zweiten Lage mit der Tiefe t₂ oder auch abwechselnd in Abschnitten unterschiedlicher Tiefe.

In Figur 6 ist die Verlegung des elektrischen Leiters 22 im Bereich des Anschlusses 24 für eine Ausführungsform mit einem Leiter 22 gezeigt. Der Leiter ist mit einem ersten Ende 22a am Anschluss 24 fixiert. Anschließend werden die Wicklungen der ersten Lage verlegt, bis der elektrische Leiter 22 mit einem Zwischenabschnitt 22b im Bereich des Anschlusses 24 schlaufenförmig umgelenkt wird und die Wicklungen der zweiten Lage verlegt werden. Abschließend wird das Ende 22c des elektrischen Leiters 22 nach Verlegen der Wicklungen der zweiten Lage an den Anschluss 24 angeschlossen.

Alternativ können auch zwei Leiter 22 vorgesehen sein, wobei ein erster Leiter 26 in den Schnitten mit der ersten Tiefe t₁ und ein zweiter Leiter 26 in den Schnitten mit der zweiten Tiefe t₂ verlegt ist.

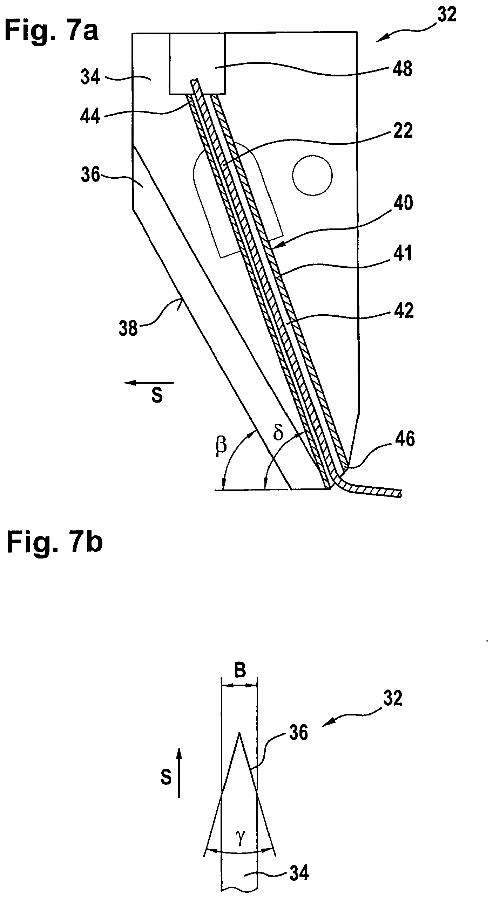

In den Figuren 7a und 7b ist ein erfindungsgemäßes Werkzeug 32 zur Vereinfachung des Einbringens eines solchen Leiters 22 in eine Umschäumung 20 eines Lenkradskeletts 18 gezeigt.

Das Werkzeug 32 hat ein Schneidwerkzeug 34 mit einer Schneideinrichtung 36, die in dieser Ausführungsform durch eine Klinge gebildet ist. Die Schneideinrichtung 36 weist eine in Schnittrichtung S weisende Schneidkante 38 auf, die, wie in Figur 6b zu sehen ist, V-förmig mit einem Keilwinkel γ von ca. 30° ausgebildet ist. Die Schneideinrichtung 36 verbreitert sich von der Schneidkante 38 ausgehend entgegen der Schnittrichtung S bis zu einer Breite B.

Rückseitig an die Schneidkante 38 unmittelbar anschließend ist ein Einführwerkzeug 40 vorgesehen, das einen durch ein Röhrchen 41 definierten Einführkanal 42 aufweist. Der Einführkanal 42 ist derart ausgebildet, dass ein Leiter 22 durch diesen durchgeschoben werden kann. Ein erstes Ende 44 des Einführkanals 42 ist so angeordnet, dass sich dieses bei einem Einbringen eines Schnittes 26 in die Umschäumung 20 außerhalb der Umschäumung 20 befindet. Das zweite, gegenüberliegende Ende 46 mündet in Schnittrichtung S kurz hinter der Schneideinrichtung 36.

In dieser Ausführungsform beträgt der Schnittwinkel β, in dem die Schneidkante 38 zur Schnittrichtung S geneigt ist, ca. 60°. Der Winkel δ, in dem der Einführkanal 42 zur Schnittrichtung S verläuft, beträgt ca. 70°.

Um einen Leiter 22 in die Umschäumung 20 eines Lenkradskeletts 18 einzubringen, wird das Werkzeug 32 auf die Oberfläche 28 der Umschäumung 20 aufgesetzt und die Schneidkante 38 in die Umschäumung 20 eingedrückt, bis die gewünschte Schnitttiefe t von 0,1mm bis 3mm erreicht ist.

Anschließend wird das Werkzeug 32 in Schnittrichtung S durch die Umschäumung 20 bewegt, wodurch ein Schnitt 26 in die Umschäumung 20 eingebracht wird. Gleichzeitig wird durch eine am Werkzeug 32 vorgesehene aktive Zuführung 48 der Leiter 22 durch den Einführkanal 42 in den Schnitt 26 eingebracht. Vorzugsweise wird der Leiter 22 von einer Vorratsrolle abgewickelt.

Das Einbringen des Schnitts 26 sowie das Einbringen bzw. Einlegen des Leiters 22 erfolgen also gleichzeitig, sodass der Leiter 22 eingelegt wird, bevor sich die Schnittränder 30 des Schnittes 26 wieder aneinander anlegen können.

Da sich der Schnitt 26 unmittelbar hinter dem Werkzeug 32, also nach dem Einlegen des Leiters 22 schließt, ist der Leiter 22 sicher im Schnitt 26 gehalten.

Zusätzlich kann der Schnitt 26 aber auch nach dem Einbringen des Leiters 22 geschlossen werden, beispielsweise durch Verkleben der Schnittränder 30 und/oder durch zusätzlich Abdecken. Das Abdecken des Schnittes 26 kann beispielsweise durch eine weitere Umschäumung oder eine Ummantelung, beispielsweise aus Leder oder Kunstleder oder ein Dekorelement, erfolgen.

Da der Leiter 22 über den Einführkanal 42 in den Schnitt 26 geführt wird, kommt dieser nicht mit den Schnittränder 30 in Anlage, sodass zum einen ein widerstandsarmes Einbringen des Leiters 22 erfolgt. Zum anderen ist eine Beschädigung der Schnittränder 30 oder der Umschäumung 20 durch den Leiter 22 ausgeschlossen.

Bei der hier beschriebenen Ausführungsform wurde die Breite b des Einführwerkzeugs 40 quer zur Schnittrichtung S ist kleiner als die Breite B der Schneideinrichtung 36 gewählt, sodass durch das Einführwerkzeug 40 kein zusätzlicher Widerstand beim Einbringen des Schnittes 26 entsteht.

Die Einbringung in Längsrichtung des Lenkradkranzes 18 bietet den Vorteil, dass der oder die Schnitte 26 mit einem zumindest 3-achsigen, frei programmierbaren Industrieroboter, an dem das Werkzeug 32 montiert ist, durchgeführt werden können, ohne dass das Werkzeug 32 abgesetzt werden muss.

Die Tiefe dieser Schnitte kann beispielsweise durch eine entsprechende Steuerung des Industrieroboters bzw. einer Werkzeugbaugruppe mit einem erfindungsgemäßen Werkzeug 32 und einer Baugruppe zum Verschwenken des Werkzeugs 32 überwacht werden.

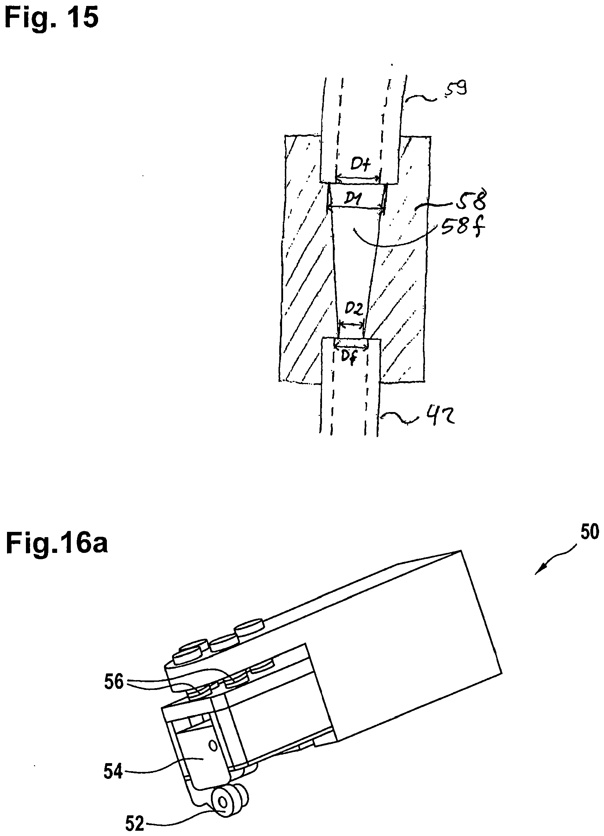

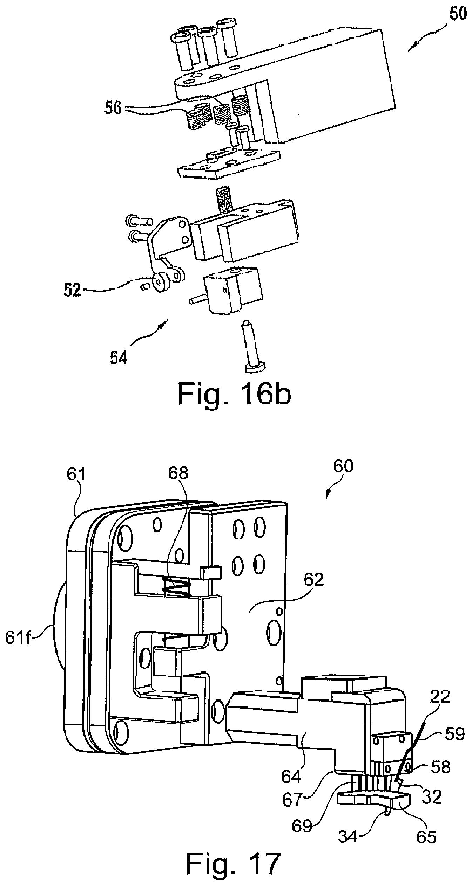

Es ist aber auch möglich, dass eine solche Werkzeugbaugruppe zusätzlich ein in den Figuren 16a und 16b gezeigtes Positionierwerkzeug 50 aufweist, mit dem die Schnitttiefe automatisch eingestellt wird.

Das Positionierwerkzeug 50 weist in der hier beschriebenen Ausführungsform eine Leitrolle 52 auf, die an der Oberfläche 28 der Umschäumung 20 anliegen kann. Wie erwähnt, kann auch (alternativ oder zusätzlich) eine taktile oder eine sensorbasierte Steuerung vorgesehen werden.

Das Schneidwerkzeug 34 ist so am Positionierungswerkzeug 50 montiert, dass die Schneideinrichtung 36 bei Anlage der Leitrolle 52 an der Oberfläche 28 eine definierte Schnitttiefe t aufweist. Das Positionierwerkzeug 52 weist dazu eine Werkzeugaufnahme 54 auf, die über mehrere Federelemente 56 federnd gelagert ist, sodass diese bei einem erhöhten Anpressdruck nachgeben kann. Dadurch kann verhindert werden, dass das Werkzeug 32 bzw. das Schneidwerkzeug 34 zu tief in die Umschäumung 20 eintaucht. Somit ist sichergestellt, dass der Schnitt 26 mit einer gleichbleibenden Tiefe t in der Umschäumung 20 ausgeführt wird.

Das Schneidwerkzeug 34 sowie das Einführwerkzeug 40 können beliebig ausgebildet sein, um den Schnitt 26 in die Umschäumung 20 einzubringen und gleichzeitig den Leiter 22 zu verlegen. Ferner kann die Klinge auch in Ultraschallgeschwindigkeit in Bewegung versetzt werden, um die Schnittqualität zu steigern. Statt einer Klinge kann das Schneidwerkzeug 34 auch andere geeignete Schneideinrichtungen 36 aufweisen.

Vorzugsweise erfolgt der Schnitt 26 ohne Materialabtrag der Umschäumung 20, sodass sichergestellt ist, dass sich der Schnitt 26 nach dem Einbringen in die Umschäumung 20 und dem Einlegen des Leiters 22 vollständig schließen kann.

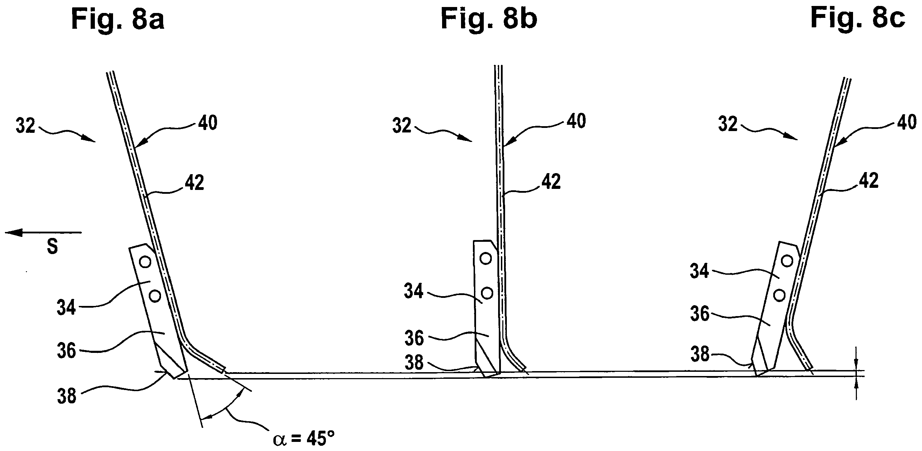

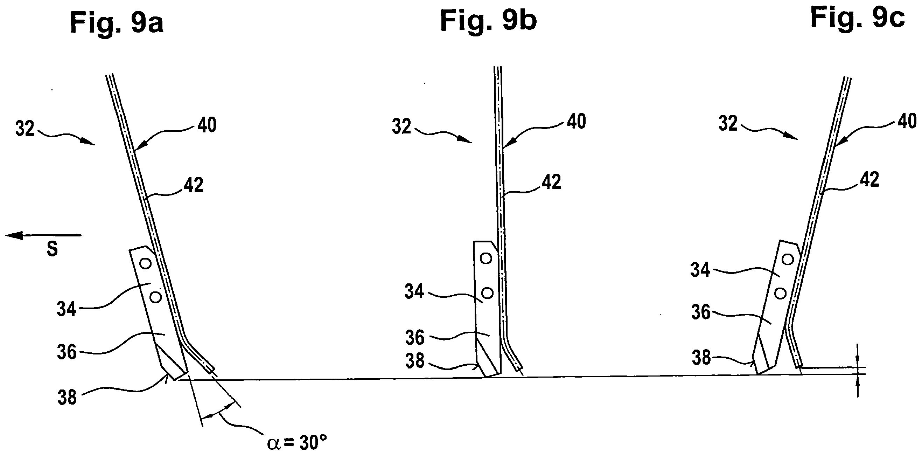

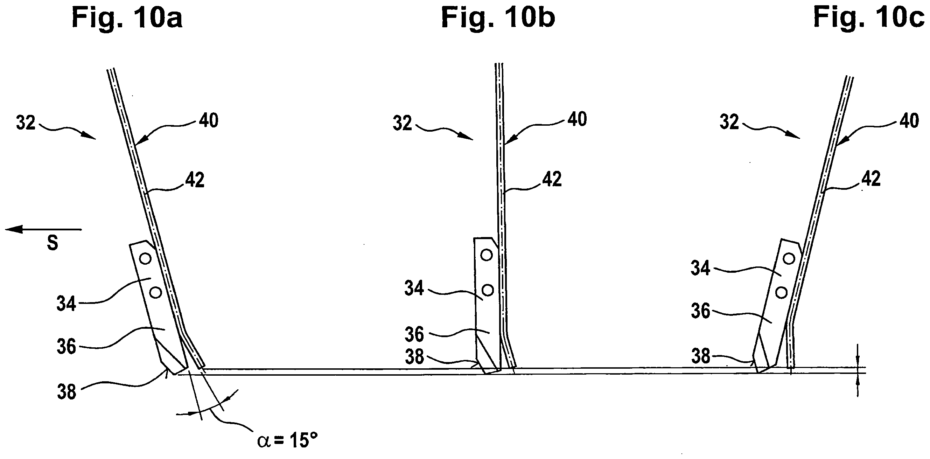

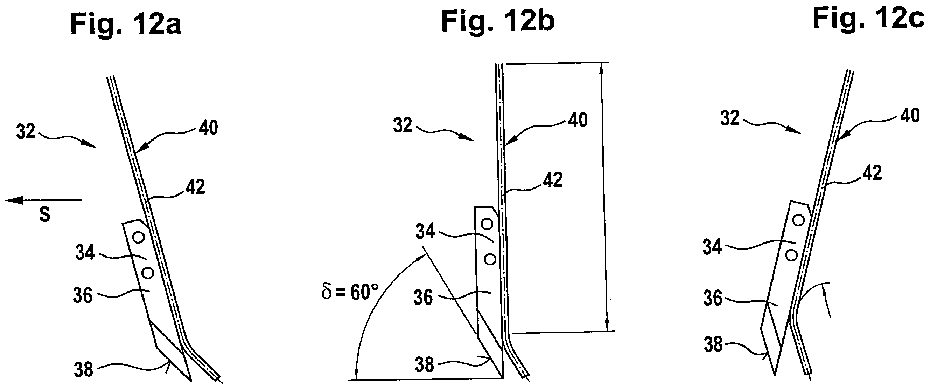

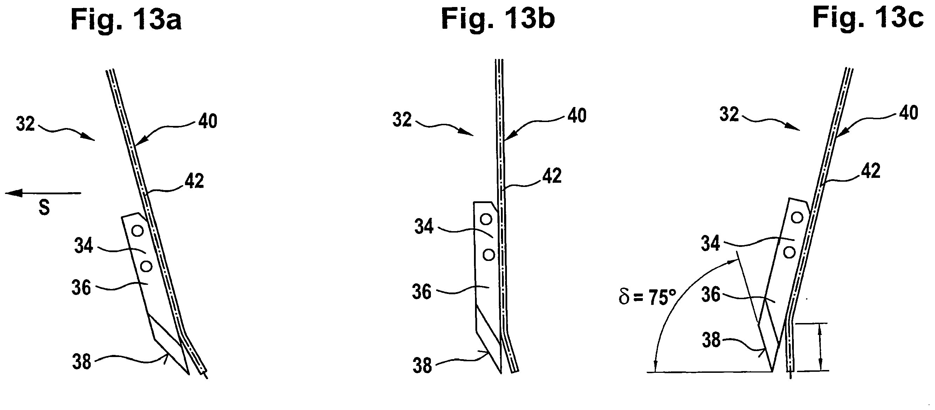

Verschiedene Ausführungsformen eines erfindungsgemäßen Werkzeugs sind in den Figuren 8a bis 8c bis 14a bis 14c gezeigt. Die in diesen Ausführungsformen gezeigten Werkzeuge 32 weisen jeweils eine Schneideinrichtung 36 mit einer Klinge auf, an deren Rückseite ein Einführkanal 42 eines Einführwerkzeugs 40 angeordnet ist.

Der Einführkanal 42 ist jeweils abschnittsweise auf der Rückseite der Schneideinrichtung 36 verlegt, wobei das hinter der Schneideinrichtung 36 angeordnete zweite Ende 46 jeweils entgegen der Schnittrichtung S vom Schneidwerkzeug 34 weg gebogen ist.

Die in den Figuren 8a bis 8c, 9a bis 9c und 10a bis 10c gezeigten Werkzeuge 32 weisen jeweils die gleiche Schneideinrichtung 36 auf, unterscheiden sich aber jeweils im Winkel α, in dem das Ende 46 des Einführkanals 42 von der Rückseite der Schneideinrichtung 36 weg gebogen ist. Der Winkel α beträgt zwischen 15° und 45°, wobei der Winkel α so gewählt sind, dass der Leiter 22 vorzugsweise entgegen der Schnittrichtung S, also bereits in der gewünschten Orientierung aus dem Einführkanal 42 austreten kann.

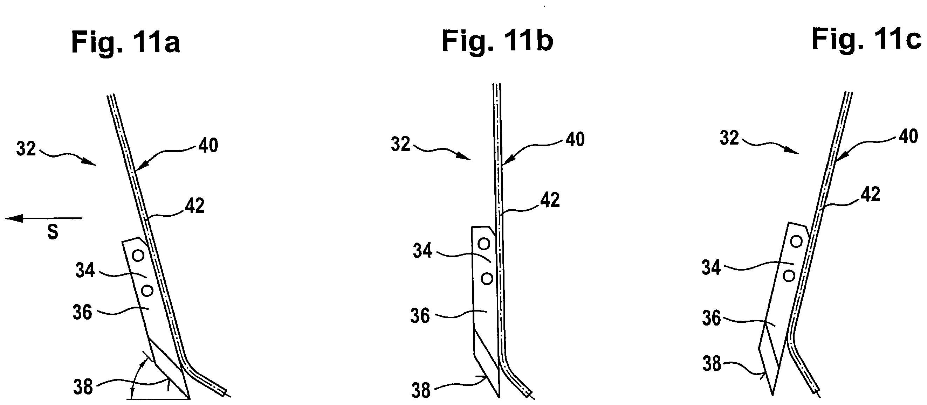

Die in den Figuren 11a bis 11c, 12a bis 12c und 13a bis 13c gezeigten Werkzeuge 32 weisen jeweils eine andere Form der Schneidkante 38 auf.

Unabhängig von der Form der Schneidkante 38 kann diese mit verschiedenen Winkeln β zur Schnittrichtung S in die Umschäumung geführt werden. Der Winkel β beträgt vorzugsweise zwischen 45° und 75°.

Unabhängig von der Form der Schneideinrichtung 36 bzw. der Schneidkante 38 ist das Einführwerkzeug 40 so ausgebildet und mit dem Schneidwerkzeug 34 mechanisch fest gekoppelt, dass der Leiter 22 unabhängig vom Winkel β jeweils in der gleichen Tiefe t in den Schnitt 26 eingebracht werden kann.

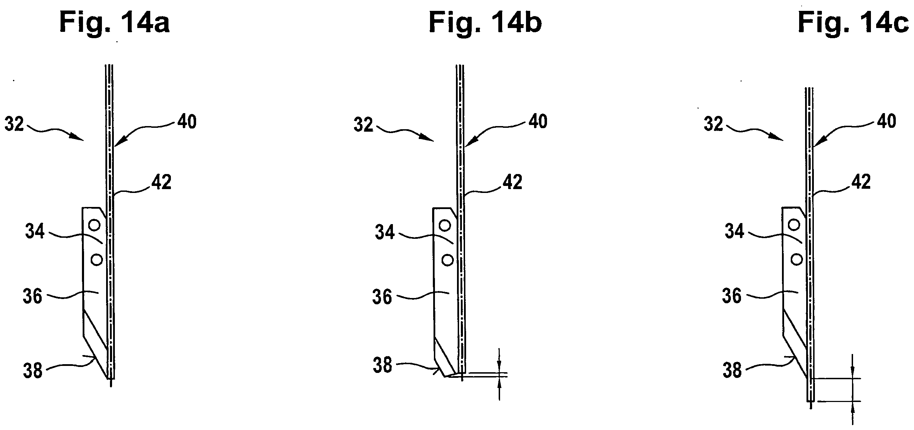

Weitere Ausführungsformen eines erfindungsgemäßen Werkzeugs sind in den Figuren 14a bis 14c gezeigt, wobei bei diesen der Einführkanal 42 jeweils gerade ausgebildet ist.

Bei sämtlichen Ausführungsformen kann die Eindringtiefe des Einführkanals 42 in die Umschäumung relativ zur tiefsten Stelle der Schneidkante 38 eingestellt werden. So ist es möglich, dass beide in gleicher Tiefe enden oder in unterschiedlicher Tiefe, wie dies am einfachsten in den Figuren 14a bis 14c zu sehen ist.

Vorzugsweise steht das Schneidwerkzeug 34 bzw. die Schneidkante 38 senkrecht zur Schnittrichtung S mit einer Vorschneidetiefe über den Einführkanal 42 vor, sodass hinter dem Schnitt ein größerer Freiraum vorhanden ist, in den der elektrische Leiter eingelegt werden kann. Diese Vorschneidetiefe liegt vorzugsweise zwischen 0,1mm und 2mm.

Es ist auch denkbar, dass das Werkzeug 32 so ausgebildet ist, dass diese Vorschneidetiefe individuell, insbesondere auch während des Schneid- und Verlegevorgangs, einstellbar ist. Dies kann über eine Werkzeugsteuerung erfolgen.

In Figur 15 ist eine Einführhilfe 58 gezeigt, die das Einfädeln des elektrischen Leiters 22 in das Einführwerkzeug 40 erleichtert. Die Einführhilfe 58 hat im Wesentlichen eine konusförmige Führung 58f, die sich an den Führungskanal 42 des Einführwerkzeuges 40 anschließt und deren Durchmesser sich von einem einführseitigen Durchmesser D1 auf einen Austrittsdurchmesser D2, der größer oder gleich als der Durchmesser Df des Führungskanals 42 ist, verjüngt. Des Weiteren ist bevorzugter Weise ein Teflonschlauch 59 mit einem Innendurchmesser Dt (Dt ist größer oder gleich D1) vorgesehen, in dem der elektrische Leiter 22 reibungsarm geführt ist. Die Einführhilfe 58 kann dauerhaft an dem Werkzeugkopf 61 (Fig. 17) angeordnet sein.

Das Schneidwerkzeug 34 kann auch andere Schneideinrichtungen 36 aufweisen, beispielsweise mit einem Schneiddraht.

Es ist lediglich sicherzustellen, dass das Einführwerkzeug 40 mit dem Schneidwerkzeug 34 gekoppelt ist und das Einführwerkzeug 40 entgegen der Schnittrichtung unmittelbar an die Schneideinrichtung 36 anschließt, um den Leiter 22 gleichzeitig mit dem Schnitt 26 in die Umschäumung 20 einzubringen.

In Figur 17 ist ein Werkzeugkopf 61 als Ausschnitt einer Werkzeugbaugruppe 60 im Bereich eines erfindungsgemäßen Werkzeugs gezeigt.

Die Werkzeugbaugruppe 60 weist zwei, hier nicht im Detail dargestellte, wenigstens 3-achsige Industrieroboter auf. An einem ersten Industrieroboter ist das Werkzeug 32 in dem Werkzeugkopf 61 gehalten. Der Werkzeugkopf ist an dem ersten Industrieroboter mittels eines Halteflansches 61f befestigt. An dem zweiten Industrieroboter ist das umschäumte Lenkradskelett 18 gehalten. Das Lenkradskelett 18 und das Werkzeug 32 können so beliebig zueinander positioniert und bewegt werden, sodass auch komplexe Schnittführungen möglich sind.

Am dem am ersten Industrieroboter gehaltenen Werkzeugkopf 61 ist eine Anpressvorrichtung 62 vorgesehen, an der das Werkzeug 32 gehalten ist. Diese Anpressvorrichtung 62 stellt sicher, dass das Werkzeug 32 mit einem konstanten Anpressdruck gegen das umschäumte Lenkradskelett gedrückt wird und eine gleichmäßige Schnittführung sichergestellt ist.

Die Anpressvorrichtung 62 weist eine dem Schneidwerkzeug 34 zugeordnete Führungseinrichtung 64 mit einen Führungsschuh 65 auf. Die Führungseinrichtung 64 weist des Weiteren einen Stellmechanismus 67, hier einen Zylinder, auf, der den Führungsschuh 65 relativ zum Schneidwerkzeug so verstellen kann, dass jeweils nur die für die gewünschte Schnitttiefe t benötigte Länge des Schneidwerkzeugs 34 über den Führungsschuh 65 vorsteht.

Die Anpressvorrichtung 62 drückt die Führungseinrichtung 64 bzw. den Führungsschuh 65 und somit das Werkzeug 32, beispielsweise federbeaufschlagt gegen die Oberfläche der Umschäumung 20 des Lenkradskeletts 18, sodass das Werkzeug 32 stets mit der gewünschten und eingestellten Länge in die Umschäumung 20 einschneidet.

Vorzugsweise beträgt die maximale Schnitttiefe t, die eingestellt werden kann, 8mm, insbesondere 6mm.

Die Schnitttiefe t kann vorzugsweise während des Schneidevorgangs verstellt werden, sodass auch unterschiedliche Einlegetiefen realisierbar sind.

Für aufwendigere Schnittführungen, insbesondere in Kreuzungsbereichen der Heizdrähte ist es auch möglich, die Anpressvorrichtung 62 zu arretieren.

Der Werkzeugkopf 61 hat eine Toleranzausgleicheinrichtung 68 vor dem Halteflansches 61f um etwaige Lenkradtoleranzen im Kranzprofil auszugleichen.

Das Werkzeug 32, insbesondere die Schneidklinge 34 ist von dem Führungsschuh 65 in Form eines Gleitschuhes umgeben, der mit einem Zylinder -Kolbensystem 69 verbunden ist. Dies kann auf Befehl den Gleitschuh zurückziehen und eine maximale Klingenlänge freilegen. Eine bei dieser Ausführung verwendete Klinge gewährt z.B. dann max. 6mm Schnitttiefe und 5mm Einlegetiefe

Im primären Einlegebereich (Lenkradkranz) ist der Gleitschuh 65, wie in Fig. 17 gezeigt, mit dem Zylinder -Kolbensystem 69 ausgefahren und gewährt so eine geringe Einlegetiefe des elektrischen Leiters. Vorzugsweise liegt der Leiter/Draht dann 0,1mm bis 2mm Tief im Schaum.

In besonderen Bereichen (wie z. B. Ledernuten, Designkanten, Fingermulden, Blendenübergang, Kreuzungspunkte, etc.) muss der Draht/Leiter bewusst tiefer in den Schaum gelegt werden. Dies erfolgt, indem das Zylinder -Kolbensystem den Gleitschuh 65 zurückzieht und die maximale Klingenlänge 34 freilegt.

Gleichzeitig wird der Toleranzausgleich 68 eingefroren (aktuell mit einer pneumatischen Bremse) und der Roboter fährt die besonderen Bereiche nummerisch gesteuert (,CNC") ab und behält dabei den vorläufigen Toleranzversatz des Kranzprofils bei.

Wenn der besondere Bereich bearbeite wurde und der primär Einlegebereich wieder erreicht ist, fährt das Zylinder -Kolbensystem (69) den Gleitschuh 65 wieder in die Grundstellung und der Toleranzausgleich wird wieder gelöst bzw. aktiviert.

Die Klinge 34 ist über einen Kraft- und Formschluss befestigt sowie mit einem Adapter /Einführhilfe 58 mit der Zuleitung (z.B. einem Teflonschlauch 59) verbunden. Der Adapter 58 ermöglicht ein einfaches Einfädeln des elektrischen Leiters. Die Drahtzuführung 59 ermöglicht das störungsfreie Zuführen des elekt. Leiters mit wenig Reibung.

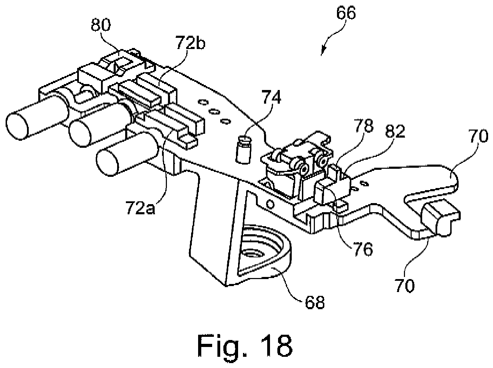

In Figur 18 ist des Weiteren eine Positionierungseinrichtung 66 gezeigt. Die Positionierungseinrichtung 66 ermöglicht ein einfacheres Verlegen des elektrischen Leiters 22, indem in ihr der Anfang 22a, das Ende 22c und/oder Zwischenabschnitte 22b des elektrischen Leiters 22 (Vergleiche Fig. 6) während des erfindungsgemäßen Verfahrens fixiert werden.

Die Positionierungseinrichtung 66 weist eine Befestigungsvorrichtung 68 sowie mehrere Positionierungshilfen 70 auf, um die Positionierungseinrichtung 66 am Lenkradskelett 18 zu fixieren.

Des Weiteren sind Haltevorrichtungen 72a, 72b für den Anfang 22a bzw. das Ende 22c des elektrischen Leiters 22, mehrere Führungselemente 74, 76 sowie eine Aufnahme 78 für den elektrischen Anschluss 24 am Lenkradskelett 18 vorgesehen.

Die Positionierungseinrichtung 66 wird zu Beginn des Verfahrens mit der Befestigungsvorrichtung 68 sowie den Positionierungshilfen 70 am Lenkradskelett fixiert und ausgerichtet. Anschließend wird der Anfang 22a des elektrischen Leiters 22 an der Haltevorrichtung 72a fixiert.

Nach diesen Schritten werden die Schnitte einer ersten Lage von Wicklungen in das Lenkradskelett 18 eingebracht und der elektrische Leiter 22 in diese eingebracht. Anschließend wird der elektrische Leiter 22 um das als Umlenkpin ausgebildete Führungselement 74 geführt und die Wicklungen einer zweiten Lage werden in das Lenkradskelett eingebracht.

Nach dem Einbringen der Schnitte 26 und dem Verlegen des elektrischen Leiters 22 wird das Ende 22c des elektrischen Leiters 22 in der zweiten Haltevorrichtung 72b fixiert und beispielsweise mit einem vorhandenen Schneidwerkzeug 80 abgeschnitten.

Abschließend wird der elektrische Leiter 22 an den in der Aufnahme 78 gehaltenen Anschluss 24 angeschlossen, wobei das Führungselement 76 als Niederhalter dient, der verhindert, dass der elektrische Leiter 22 aus der Umschäumung 20 herausgezogen wird.

Eine Montagehilfe 82 unterstützt dabei die exakte Ausrichtung des Anschlusses 24 sowie das Anschließen des elektrischen Leiters 22.

Nach dem Durchführen des Verfahrens und dem Anschließen des elektrischen Leiters 22 kann die Positionierungseinrichtung 66 vom Lenkradskelett 18 entfernt werden.

Nach dem Verlegen und Anschließen des elektrischen Leiters 22 kann dieser stark erwärmt werden, sodass der angrenzende Schaum aufgeweicht und/oder kurzzeitig verflüssigt wird und nach dem Abkühlen mit dem elektrischen Leiter 22 verklebt. Hierdurch erfolg eine dauerhafte Fixierung des Leiters 22 in der Umschäumung des Lenkradskelettes.

Alternativ kann der elektrische Leiter einen dünnen thermoplastischen Kleberüberzug aufweisen. Dieser kann mittels Bestromung / Erwärmung aktiviert werden. Durch die Erwärmung des Klebers kann die Schnittkante zudem wieder verschlossen werden.

## Patentansprüche

1. Verfahren zum Einbringen eines elektrischen Leiters (22), insbesondere eines Heizdrahtes, in eine Umschäumung (20) eines Lenkradskeletts (18) mit folgenden Schritten:
- Einbringen zumindest eines Schnittes (26) in die Umschäumung (20) mittels eines Schneidwerkzeugs (34) in einem ersten Verfahrensschritt, und **gekennzeichnet durch**
- gleichzeitiges Einbringen des elektrischen Leiters (22) in den erzeugten Schnitt (26) in einem zweiten Verfahrensschritt.

2. Verfahren nach Anspruch 1, **dadurch gekennzeichnet, dass** das Einbringen des Leiters (22) erfolgt, bevor sich die beim Einbringen des Schnittes (26) auseinandergedrückten Schnittränder (30) wieder aneinander anlegen, und/oder **dadurch gekennzeichnet, dass** der Schnitt (26) nach dem Einlegen des Leiters (22) sich selbst verschließt, verschlossen wird und/oder abgedeckt wird, wobei das Verschließen vorzugsweise durch Verschmelzen oder Verkleben der Schnittränder erfolgt.

3. Verfahren nach einem der Ansprüche 1 oder 2, **dadurch gekennzeichnet, dass** die Umschäumung (20) nach dem Einbringen des Leiters (22) mit einer weiteren Umschäumung oder einer Ummantelung abgedeckt wird, und/oder **dadurch gekennzeichnet, dass** der zumindest eine Schnitt (26) im Wesentlichen in Umfangsrichtung um die Lenkradnabe (12) längs des Lenkradkranzes (14) verläuft.

4. Verfahren nach einem der vorhergehenden Ansprüche, **dadurch gekennzeichnet, dass** der Leiter (22) nach dem Einbringen in den Schnitt (26) stoffschlüssig mit der Umschäumung (20) verbunden wird, insbesondere durch ein Smartbond-Verfahren oder durch ein kurzzeitiges Erhitzen und anschließendes Abkühlen des Leiters (22), wobei das Erhitzen vorzugsweise auf eine Temperatur im Bereich der Schmelztemperatur der Umschäumung (20) erfolgt, und/oder **dadurch gekennzeichnet, dass** der Schnitt (26) eine Tiefe von mindestens 0,1 mm, vorzugsweise von mindestens 0,5 mm, insbesondere von mindestens 1 mm hat und/oder vorzugsweise eine Tiefe von höchstens 9 mm, vorzugsweise von höchstens 5 mm, weiter vorzugsweise von höchstens 3 mm, insbesondere von höchstens 2 mm hat, und/oder **dadurch gekennzeichnet, dass** die Schnitttiefe das 0,8 bis 10,5-fache, insbesondere das 1,0-fache bis 1,5-fache des Drahtdurchmessers beträgt.

5. Verfahren nach einem der vorhergehenden Ansprüche, **dadurch gekennzeichnet, dass** der Schnitt (26) längs des Lenkradkranzes (14) in mehreren Umläufen um die Lenkradnabe (12) geführt wird, sodass ein im Wesentlichen spiralförmiger Schnitt (26) erzeugt wird und der Leiter (22) in mehreren Wicklungen verläuft, und/oder dass bei überkreuzenden Schnitten die Schnitttiefen im Kreuzungspunkt unterschiedlich sind.

6. Verfahren nach einem der vorhergehenden Ansprüche, **dadurch gekennzeichnet, dass** der Schnitt (26) und das Einbringen des Leiters (22) mittels eines Werkzeugs (32) erfolgt, das auf einem wenigstens 3-achsigen, frei programmierbaren Industrieroboter montiert ist, der das Werkzeug (32) bewegt, und/oder **dadurch gekennzeichnet, dass** das Lenkradskelett (18) auf einem zweiten wenigstens 3-achsigen, frei programmierbaren Industrieroboter gehalten ist, der das Lenkradskelett (18) relativ zum Werkzeug (32) bewegt.

7. Werkzeug (32) zum Einbringen eines elektrischen Leiters (22), insbesondere eines Heizdrahtes, in eine Umschäumung (20) eines Lenkradskeletts, insbesondere zur Durchführung eines Verfahrens nach einem der vorhergehenden Ansprüche, wobei das Werkzeug (32) ein Schneidwerkzeug (34) mit einer Schneideinrichtung (36), die eine in Schnittrichtung (S) weisende Schneidkante (38) aufweist, sowie ein Einführwerkzeug (40) für den Leiter (22) hat, wobei das Schneidwerkzeug (34) und das Einführwerkzeug (40) miteinander gekoppelt sind und sich das Einführwerkzeug (40) entgegen der Schnittrichtung (S) vorzugsweise unmittelbar an die Schneideinrichtung (36) anschließt.

8. Werkzeug nach Anspruch 7, **dadurch gekennzeichnet, dass** die Breite (b) des Einführwerkzeugs (40) senkrecht zur Schnittrichtung (S) kleiner als oder gleich der Breite (B) der Schneideinrichtung (36) ist, und/oder **dadurch gekennzeichnet, dass** das Einführwerkzeug (40) einen Einführkanal (42) aufweist, durch den der Leiter (22) geführt werden kann, wobei der Einführkanal (42) in Schnittrichtung (S) hinter der Schneideinrichtung (36) des Schneidwerkzeugs (34) endet, und/oder **dadurch gekennzeichnet, dass** das Schneidwerkzeug (34) senkrecht zur Schnittrichtung (S) mit einer Vorschneidetiefe über das Einführwerkzeug (40) vorsteht, wobei die Vorschneidetiefe zwischen 0,1 mm und 2 mm liegt, und/oder **dadurch gekennzeichnet, dass** eine Anpressvorrichtung (62) vorgesehen ist, die ausgebildet ist, das Werkzeug (32) mit einer definierten Kraft, insbesondere einer definierten Federkraft, gegen ein Werkstück, insbesondere ein Lenkradskelett (18), zu beaufschlagen, und insbesondere dadurch, dass die Anpresseinrichtung ausgebildet ist, Toleranzen im Werkstück auszugleichen und vorzugsweise eine Fixierung des Toleranzausgleiches erfolgen kann.

9. Werkzeug nach einem der Ansprüche 7 oder 8, **dadurch gekennzeichnet, dass** das Einführwerkzeug (40) eine sich insbesondere konusförmig verjüngende Führung in einer Einführhilfe (58) des elektrischen Leiters (22) aufweist, und/oder **dadurch gekennzeichnet, dass** die Schneideinrichtung (36) eine Klinge und/oder ein Ultraschallschneidwerkzeug ist, und/oder **dadurch gekennzeichnet, dass** das Schneidwerkzeug (34) eine separate Führungseinrichtung (64) zur Einstellung der Schnitttiefe aufweist, wobei, vorzugsweise, die Führungseinrichtung (64) einen Führungsschuh aufweist, der am Werkstück, insbesondere am Lenkradskelett (18), anliegen kann, wobei die Schneideinrichtung (36) über diesen Führungsschuh (65) hinaus in das Werkstück ragt, und/oder wobei die Führungseinrichtung (64) einen Stellmechanismus (67) aufweist, der den Führungsschuh (65) relativ zur Schneideinrichtung (36) bewegen kann.

10. Werkzeugbaugruppe zum Einbringen eines Leiters (22), insbesondere eines Heizdrahtes, in eine Umschäumung (20) eines Lenkradskeletts (18), mit einem Werkzeug (32) nach einem der Ansprüche 7 bis 9 und mit einem Industrieroboter, an dem das Werkzeug (32) montiert ist und dreidimensional im Raum bewegt werden kann, wobei die Werkzeugbaugruppe, vorzugsweise, **dadurch gekennzeichnet** ist, das ein zweiter, frei programmierbarer Industrieroboter vorgesehen ist, auf dem das Lenkradskelett (18) montiert und dreidimensional im Raum bewegt werden kann.

11. Werkzeugbaugruppe nach Anspruch 10, **dadurch gekennzeichnet, dass** eine Positionierungseinrichtung (66) für den elektrischen Leiter (22) vorgesehen ist, die am Lenkradskelett (18) positioniert werden kann, eine Aufnahme (78) für einen am Lenkradskelett (18) angeordneten elektrischen Anschluss (24) für den elektrischen Leiter (22) sowie Halteelemente (72a, 72b) für den Anfang (22a) und das Ende (22c) des elektrischen Leiters (22) aufweist, wobei, vorzugsweise, die Positionierungseinrichtung (66) Führungselemente (74, 76) für den elektrischen Leiter (22) aufweist, und/oder wobei, vorzugsweise, die Positionierungseinrichtung (66) eine Befestigungsvorrichtung (68) und Positionierungshilfen (70) aufweist, um die Positionierungseinrichtung (66) am Lenkradskelett (18) zu fixieren.

12. Fahrzeuglenkrad (10) mit
einem Lenkradskelett (18),
einem Lenkradkranz (14), der mit einer Umschäumung (20) umschäumt ist, und
einem elektrischen Leiter (22),
wobei in der Umschäumung (20) ein Schnitt (26) eingebracht ist, in dem der elektrische Leiter (22) liegt,
**dadurch gekennzeichnet, dass** der Schnitt (26) Kreuzungspunkte von Abschnitten des Schnitts (26) aufweist, wobei im Bereich der Kreuzungspunkte einer der sich kreuzenden Abschnitte des Schnittes (26) eine größere Tiefe (t) aufweist und der elektrische Leiter in diesem Abschnitt des Schnittes (26) tiefer eingelegt ist als im darüberliegenden Abschnitt.

13. Fahrzeuglenkrad nach Anspruch 12, **dadurch gekennzeichnet, dass** der Leiter in der Umschäumung (20), insbesondere thermisch, insbesondere durch Erhitzen und/oder Einschmelzen in die Umschäumung dauerhaft in der Umschäumung fixiert ist, und/oder **dadurch gekennzeichnet, dass** die Umschäumung (20) zumindest im Bereich des Schnitts (26) mit einer weiteren Umschäumung oder einer Ummantelung, vorzugsweise einem Leder, abgedeckt ist.

14. Fahrzeuglenkrad nach Anspruch 12 oder 13, **dadurch gekennzeichnet, dass** zumindest ein Schnitt (26) im Wesentlichen in Umfangsrichtung um die Lenkradnabe (12) längs des Lenkradkranzes (14) verläuft, vorzugsweise in mehreren Umläufen zur Erzeugung eines spiralförmigen Schnitts, wobei der Leiter (22) in wenigstens einer, vorzugsweise in mehreren Wicklungen in der Umschäumung (20) verläuft, und/oder **dadurch gekennzeichnet, dass** eine erste Lage von Wicklungen des elektrischen Leiters (22) in einer ersten Tiefe (ti) verlegt ist und eine zweite Lage von Wicklungen des elektrischen Leiters (22) in einer zweiten Tiefe (t₂) verlegt ist, wobei insbesondere die Wicklungen der ersten Lage versetzt zu den Wicklungen der zweiten Lage sind.

## Claims

1. A method of introducing an electric conductor (22), especially a heating wire, into foam cladding (20) of a steering wheel frame (18), comprising the following steps of:
- introducing at least one cut (26) into the foam cladding (20) by means of a cutting tool (34) during a first method step, and
**characterized by**
- simultaneously introducing the electric conductor (22) into the produced cut (26) during a second method step.

2. The method according to claim 1, **characterized in that** the conductor (22) is introduced before the cutting edges (30) forced apart during introducing the cut (26) will abut against each other again, and/or **characterized in that** the cut (26) automatically closes, is closed and/or is covered after inserting the conductor (22), wherein closing is preferably performed by melting or gluing the cutting edges.

3. The method according to any one of the claims 1 or 2, **characterized in that**, after introducing the conductor (22), the foam cladding (20) is covered by further foam cladding or wrapping, and/or **characterized in that** the at least one cut (26) substantially extends in the circumferential direction around the steering wheel hub (12) along the steering wheel rim (14).

4. The method according to any one of the preceding claims, **characterized in that**, after being introduced into the cut (26), the conductor (22) is integrally bonded to the foam cladding (20), especially by a smart bond method or by short-time heating and subsequent cooling of the conductor (22), wherein the heating is preferably carried out to a temperature within the range of the melting temperature of the foam cladding (20), and/or **characterized in that** the cut (26) has a depth of at least 0.1 mm, preferably of at least 0.5 mm, especially of at least 1 mm, and/or preferably has a depth of no more than 9 mm, preferably of no more than 5 mm, further preferred of no more than 3 mm, especially of no more than 2 mm, and/or **characterized in that** the cutting depth amounts to 0.8 to 10.5 times, especially to 1.0 times to 1.5 times the wire diameter.

5. The method according to any one of the preceding claims, **characterized in that** the cut (26) is guided along the steering wheel rim (14) in plural revolutions about the steering wheel hub (12) so that a substantially spiraled cut (26) is produced and the conductor (22) extends in plural windings, and/or **in that**, in the case of intersecting cuts, the cutting depths are different in the point of intersection.

6. The method according to any one of the preceding claims, **characterized in that** the cut (26) and the introduction of the conductor (22) are implemented by means of a tool (32) being mounted on an at least triaxial freely programmable industrial robot that moves the tool (32), and/or **characterized in that** the steering wheel frame (18) is held on a second at least triaxial freely programmable industrial robot that moves the steering wheel frame (18) relative to the tool (32).

7. A tool (32) for introducing an electric conductor (22), especially a heating wire, into foam cladding (20) of a steering wheel frame, especially for implementing a method according to any one of the preceding claims, wherein the tool (32) includes a cutting tool (34) having a cutting means (36) which includes a cutting edge (38) pointing in the cutting direction (S), as well as an inserting tool (40) for the conductor (22), wherein the cutting tool (34) and the inserting tool (40) are coupled to each other and the inserting tool (40) is preferably directly connected to the cutting means (36) against the cutting direction (S).

8. The tool according to claim 7, **characterized in that** the width (b) of the inserting tool (40) perpendicularly to the cutting direction (S) is smaller than or equal to the width (B) of the cutting means (36), and/or **characterized in that** the inserting tool (40) includes an inserting passage (42) through which the conductor (22) can be guided, the inserting passage (42) ending, in the cutting direction (S), behind the cutting means (36) of the cutting tool (34), and/or **characterized in that** the cutting tool (34) protrudes from the inserting tool (40) perpendicularly to the cutting direction (S) at a precutting depth, the precutting depth ranging from 0.1 mm to 2 mm, and/or **characterized in that** a pressing device (62) is provided which is configured to load the tool (32) with a defined force, especially a defined spring force, against a workpiece, especially a steering wheel frame (18), and especially **in that** the pressing device is configured to compensate for tolerances in the workpiece and, preferably, the tolerance compensation can be fixed.

9. The tool according to any one of the claims 7 or 8, **characterized in that** the inserting tool (40) includes an especially conically tapering guide within an inserting aid (58) of the electric conductor (22), and/or **characterized in that** the cutting means (36) is a blade and/or an ultrasonic cutting tool, and/or **characterized in that** the cutting tool (34) comprises a separate guide means (64) for adjusting the cutting depth, wherein, preferably, the guide means (64) comprises a guide shoe adapted to abut on the workpiece, especially on the steering wheel frame (18), wherein the cutting means (36) protrudes from said guide shoe (65) into the workpiece, and/or wherein the guide means (64) comprises an actuating mechanism (67) which is adapted to move the guide shoe (65) relative to the cutting means (36).

10. A tool assembly for introducing a conductor (22), especially a heating wire, to foam cladding (20) of a steering wheel frame (18), comprising a tool (32) according to any one of the claims 7 to 9, and comprising an industrial robot on which the tool (32) is mounted and can be moved three-dimensionally in space, wherein the tool assembly is preferably **characterized in that** a second freely programmable industrial robot is provided on which the steering wheel frame (18) can be mounted and moved three-dimensionally in space.

11. The tool assembly according to claim 10, **characterized in that** a positioning means (66) for the electric conductor (22) is provided which can be positioned on the steering wheel frame (18), and includes a seat (78) for an electric connection (24) for the electric conductor (22) arranged on the steering wheel frame (18), as well as retaining elements (72a, 72b) for the beginning (22a) and the end (22c) of the electric conductor (22), wherein, preferably, the positioning means (66) includes guide elements (74, 76) for the electric conductor (22), and/or wherein, preferably, the positioning means (66) includes a fastening device (68) and positioning aids (70) for fixing the positioning means (66) to the steering wheel frame (18).

12. A vehicle steering wheel (10) comprising
a steering wheel frame (18),
a steering wheel rim (14) which is foam-padded by foam cladding (20), and
an electric conductor (22),
wherein a cut (26) within which the electric conductor (22) is located is introduced to the foam cladding (20),
**characterized in that** the cut (26) includes points of intersection of portions of the cut (26), wherein, in the area of the points of intersection, one of the intersecting portions of the cut (26) has a larger depth (t) and, in this portion of the cut (26), the electric conductor is inserted more deeply than in the overlying portion.

13. The vehicle steering wheel according to claim 12, **characterized in that** the conductor is permanently fixed in the foam cladding (20), especially thermally, especially by heating and/or melting into the foam cladding, and/or **characterized in that** the foam cladding (20) is covered at least in the area of the cut (26) by further foam cladding or wrapping, preferably made of leather.

14. The vehicle steering wheel according to claim 12 or 13, **characterized in that** at least one cut (26) extends substantially in the circumferential direction around the steering wheel hub (12) along the steering wheel rim (14), preferably in plural revolutions for producing a spiral-shaped cut, the conductor (22) extending in at least one, preferably in plural windings within the foam cladding (20), and/or **characterized in that** a first layer of windings of the electric conductor (22) is laid at a first depth (ti) and a second layer of windings of the electric conductor (22) is laid at a second depth (t₂), wherein especially the windings of the first layer are offset against the windings of the second layer.

## Revendications

1. Procédé pour introduire un conducteur électrique (22), en particulier un fil chauffant, dans un revêtement en mousse (20) d'une armature de volant (18) avec les étapes suivantes:
- réaliser au moins une découpe (26) dans le revêtement en mousse (20) au moyen d'un outil de coupe (34) dans une première étape du processus, et
aractérisé en ce que
- introduction simultanée du conducteur électrique (22) dans la découpe (26) réalisée lors d'une deuxième étape de procédé.

2. Procédé selon la revendication 1, **caractérisé en ce que** l'introduction du conducteur (22) a lieu avant que les bords coupés (30) écartés lors de la réalisation de la découpe (26) ne viennent à nouveau en contact, et / ou **caractérisé en ce que** la découpe (26) après insertion du conducteur (22), se ferme d'elle-même, sera fermée et / ou sera recouverte, pour lequel la fermeture est de préférence réalisée par fusion ou collage des bords coupés.

3. Procédé selon l'une quelconque des revendications 1 ou 2, **caractérisé en ce que** le revêtement en mousse (20) après l'introduction du conducteur (22) est recouvert d'un autre revêtement en mousse ou d'une gaine, et / ou **caractérisé en ce que** la au moins une découpe (26) s'étend essentiellement dans la direction circonférentielle autour du moyeu de volant (12) le long de la jante de volant (14).

4. Procédé selon l'une des revendications précédentes, **caractérisé en ce que** le conducteur (22) après avoir été introduit dans la découpe (26) est relié matériellement au revêtement en mousse (20), notamment par un procédé Smartbond ou par un bref chauffage et refroidissement ultérieur du conducteur (22), le chauffage ayant lieu de préférence à une température dans la plage de la température de fusion du revêtement en mousse (20), et / ou **caractérisé en ce que** la découpe (26) a une profondeur d'au moins 0,1 mm, de préférence d'au moins 0,5 mm, en particulier d'au moins 1 mm et / ou de préférence une profondeur d'au plus 9 mm, de préférence d'au plus 5 mm, plus préférentiellement d'au plus 3 mm, en particulier d'au plus 2 mm, et / ou **caractérisé en ce que** la profondeur de coupe est de 0 0,8 à 10,5 fois, en particulier 1,0 à 1,5 fois le diamètre du fil.

5. Procédé selon l'une quelconque des revendications précédentes, **caractérisé en ce que** la découpe (26) le long de la jante de volant (14) est réalisée en plusieurs tours autour du moyeu de volant (12), de sorte qu'une découpe sensiblement en spirale (26) est réalisée et le conducteur (22) se déroule en plusieurs enroulements, et / ou qu'en cas de coupes croisées, les profondeurs de coupe au point de croisement sont différentes.

6. Procédé selon l'une quelconque des revendications précédentes, **caractérisé en ce que** la découpe (26) et l'introduction du conducteur (22) s'effectuent au moyen d'un outil (32) qui est monté sur un robot industriel au moins 3 axes librement programmable, lequel déplace l'outil (32), et / ou **caractérisé en ce que** l'armature de volant (18) est maintenu sur un deuxième robot industriel librement programmable d'au moins 3 axes qui déplace l'armature de volant (18) par rapport à l'outil (32).

7. Outil (32) pour introduire un conducteur électrique (22), en particulier un fil chauffant, dans un revêtement en mousse (20) d'une armature de volant, en particulier pour mettre en œuvre un procédé selon l'une des revendications précédentes, dans lequel l'outil (32) est un outil de coupe (34)) avec un dispositif de coupe (36) qui a un bord de coupe (38) pointant dans la direction de coupe (S), et un outil d'insertion (40) pour le conducteur (22), l'outil de coupe (34) et l'outil d'insertion (40) étant couplés l'un à l'autre et l'outil d'insertion (40) est de préférence directement relié au dispositif de coupe (36) opposé à la direction de coupe (S).

8. Outil selon la revendication 7, **caractérisé en ce que** la largeur (b) de l'outil d'insertion (40) perpendiculaire à la direction de coupe (S) est inférieure ou égale à la largeur (B) du dispositif de coupe (36), et / ou **caractérisé en ce que** l'outil d'insertion (40) a un canal d'insertion (42) à travers lequel le conducteur (22) peut être guidé, pour lequel le canal d'insertion (42) se termine dans la direction de coupe (S) derrière le dispositif de coupe (36) de l'outil de coupe (34), et / ou **caractérisé en ce que** l'outil de coupe (34) fait saillie perpendiculairement à la direction de coupe (S) avec une profondeur de pré-coupe sur l'outil d'insertion (40), pour lequel la profondeur de pré-coupe est comprise entre 0,1 mm et 2 mm, et / ou **caractérisé en ce qu'**un dispositif de pression (62) est prévu, qui est conçu pour agir sur l'outil (32) avec une force définie, en particulier une force de ressort définie, contre une pièce de travail, en particulier une armature de volant (18), et en particulier **en ce que**, le dispositif de pression est formé, peut compenser les tolérances de la pièce de travail et de préférence peut avoir lieu une fixation de la compensation des tolérances.

9. Outil selon l'une des revendications 7 ou 8, **caractérisé en ce que** l'outil d'insertion (40) comporte un guide notamment conique se rétrécissant pour une aide à l'insertion (58) du conducteur électrique (22), et / ou **caractérisé en ce que** le dispositif de coupe (36) est une lame et / ou un outil de coupe à ultrasons, et / ou **caractérisé en ce que** l'outil de coupe (34) a un dispositif de guidage séparé (64) pour régler la profondeur de coupe, pour lequel, de préférence, le dispositif de guidage (64) a un sabot de guidage qui est fixé à la pièce de travail, en particulier sur l'armature du volant (18), pour lequel le dispositif de coupe (36) fait saillie au-delà de ce patin de guidage (65) dans la pièce de travail, et / ou pour lequel le dispositif de guidage (64) comporte un mécanisme de réglage (67) dont le patin de guidage ( 65) peut se déplacer par rapport au dispositif de coupe (36).

10. Ensemble d'outils pour introduire un conducteur (22), notamment un fil chauffant, dans un revêtement en mousse (20) d'une armature de volant (18), avec un outil (32) selon l'une des revendications 7 à 9 et avec un robot industriel sur lequel l'outil (32) est monté et peut être déplacé en trois dimensions dans l'espace, pour lequel l'ensemble d'outil, de préférence **caractérisé en ce qu'**un deuxième robot industriel librement programmable est prévu sur lequel l'armature de volant (18) peut être monté et déplacé en trois dimensions dans l'espace.

11. Ensemble d'outils selon la revendication 10, **caractérisé en ce qu'**un dispositif de positionnement (66) est prévu pour le conducteur électrique (22), qui peut être positionné sur l'armature de volant (18), comporte un réceptacle (78) pour une connexion électrique (24) disposée sur l'armature de volant (18) pour le conducteur électrique (22) ainsi que les éléments de maintien (72a, 72b) pour le début (22a) et la fin (22c) du conducteur électrique (22), pour lequel, de préférence, le dispositif de positionnement (66) comporte des éléments de guidage (74, 76) pour le conducteur électrique (22), et / ou pour lequel, de préférence, le dispositif de positionnement (66) comporte un dispositif de fixation (68) et des aides de positionnement (70) pour fixer le dispositif de positionnement (66) sur l'armature de volant (18).

12. Volant de véhicule (10) avec
une armature de volant (18),
une jante de volant (14) qui est revêtue de mousse avec un revêtement en mousse (20), et
un conducteur électrique (22),
pour lequel une découpe (26) est pratiquée dans le revêtement en mousse (20), dans lequel se trouve le conducteur électrique (22),
**caractérisé en ce que** la découpe (26) présente des points d'intersection de sections de la découpe (26), pour lequel dans la zone des points d'intersection l'une des sections d'intersection de la découpe (26) présente une plus grande profondeur (t) et le conducteur électrique dans cette section de la découpe (26) est inséré plus profondément que dans la section se trouvant au-dessus.

13. Volant de véhicule selon la revendication 12, **caractérisé en ce que** le conducteur est fixé durablement dans le revêtement en mousse (20), en particulier thermiquement, en particulier par chauffage et / ou fusion dans le revêtement en mousse, et / ou **caractérisé en ce que** le revêtement en mousse (20) est recouvert au moins dans la zone de la découpe (26) avec une autre mousse ou une gaine, de préférence un cuir.

14. Volant de véhicule selon la revendication 12 ou 13, **caractérisé en ce qu'**au moins une découpe (26) s'étend essentiellement dans la direction circonférentielle autour du moyeu de volant (12) le long de la jante de volant (14), de préférence en plusieurs tours pour réaliser une découpe en spirale, pour lequel le conducteur (22) se déroule dans au moins un, de préférence plusieurs enroulements dans le revêtement en mousse (20), et / ou **caractérisé en ce qu'**une première couche d'enroulements du conducteur électrique (22) est posée à une première profondeur (tl) et une seconde couche d'enroulements du conducteur électrique (22) est posé à une deuxième profondeur (t2), pour lequel en particulier les enroulements de la première couche sont décalés des enroulements de la deuxième couche.
